## Europäisches Patentamt
## European Patent Office
## Office européen des brevets

(11) Publication number: **0 052 149**
A1

(12)
# EUROPEAN PATENT APPLICATION
published in accordance with Art. 158(3) EPC

(21) Application number: **81900943.2**

(22) Date of filing: **07.04.81**

Data of the international application taken as a basis:

(86) International application number:
**PCT/JP81/00078**

(87) International publication number:
**WO81/02991 (29.10.81 81/25)**

(51) Int. Cl.³: **B 23 Q 7/04**
**B 25 J 9/00**

(30) Priority: **22.04.80 JP 52332/80**
**09.03.81 JP 31400/81**

(43) Date of publication of application:
**26.05.82 Bulletin 82/21**

(84) Designated Contracting States:
**DE FR GB**

(71) Applicant: **IKEGAI TEKKO KABUSHIKI KAISHA**
**1-21, Shiba 4-chome**
**Minato-ku, Tokyo 108(JP)**

(72) Inventor: **TAJIMA, Masaharu**
**8-18, Higashiikuta 4-chome Tama-ku**
**Kawasaki-shi Kanagawa 215(JP)**

(74) Representative: **Ruffles, Graham Keith et al,**
**MARKS & CLERK 57-60 Lincoln's Inn Fields**
**London WC2A 3LS(GB)**

(54) **FLEXIBLE LOADER FOR MACHINE TOOL AND METHOD OF USING THE SAME.**

(57) A flexible loader for supplying a blank and for conveying a workpiece out of a machine tool, which includes a base (6) fixed onto a spindle housing (5) of the machine tool, slides (7, 8) movable parallel to the spindle axis (9) guided by a guide member (10) of the base (6), a first servo motor (16) for moving the slides (7, 8) longitudinally, an arm (18) supported by the end of one of the slides (7, 8) and rotatable around a second axis (17) parallel to the spindle axis (9), a second servo motor (26) for rotating the arm (18), a wrist (21) supported by the end of the arm (18) and rotatable around a third axis (20) parallel to the spindle axis (9), a hand (23) supported by the wrist (21) rotatable around a fourth axis (22) perpendicularly to the third axis (20), workpiece-holding fingers (25, 131) mounted on the hand (23) and openable by hydraulic cylinders (24, 115, 117), and third and fourth servo motors (11, 12) mounted at the far end of the slides (7, 8) respectively, for rotating the wrist (21) and the arm (18) respectively, through a transmission system within the slide (7) and the arm (18). The fingers (25, 131) are disposed at positions in the vicinity of the chuck (3) of the spindle stock (5), and of the conveyor (28) installed adjacent to the machine tool, respectively.

./...

FIG. 6

Flexible Loader Apparatus for Machine Tools
and Method for Use Thereof

## Technical Field

The present invention relates to a loader apparatus for machine tools, and more particularly to a flexible loader apparatus for machine tools to be built therein or separately installed to be associated therewith to automatically supply workpieces thereto or to automatically extract machined workpieces therefrom, as well as to a method for the use thereof.

## Background Art

It has hitherto been known to use industrial robots, etc. to automatically feed workpieces to machine tools or to extract machined workpieces therefrom in order to realize a continuous machining operation with the machine tools. However, it is a wellknown fact that this procedure reveals several disadvantages.

That is, in the conventional industrial robots, in order to prevent a wrist member mounted to the end of an arm and a hand member mounted to the wrist member, from relative movement therebetween so that the wrist member can perform an operation independently of the hand member, the arm must be provided near the wrist member with a differential gear. However, this makes the constitution near the wrist member complicated, large and heavy so that problems arise with regard to manoeuvrability, safety and reliability. Further, since such industrial robots are required to be installed separately from the machine tools additional floor space is required for the robots and they may interfere with an operator's work such as the exchange of cutting tools, etc. Further the operational range of the robot partially overlaps with that of the operator so that questions in terms of safety in operation arise. Moreover, although it is necessary to alter the operation of the robot according to the shape, dimensions, etc. of a workpiece to be machined, the procedure for changing the robot's operation is very complicated and usually takes a considerable amount of time to achieve, even when carried out by a person familiar with the task.

## Disclosure of the Invention

It is an object of the present invention to provide a flexible loader apparatus for machine tools which allows the automatic feed or removal of workpieces to or from machine tools.

It is another object of the present invention to provide a flexible loader apparatus for machine tools which has excellent manoeuvrability, and exhibits a high degree of safety and is also high in reliability.

It is a further object of the present invention to provide a flexible loader apparatus for machine tools which requires a relatively small area for installation and does not interfere with the work to be carried out by an operator, such as the exchange of cutting tools, etc.

It is still a further object of the present invention to provide a double hand device in a flexible loader apparatus for machine tools which allows the automatic supply of workpieces to the machine tool and the withdrawal of machined workpieces therefrom to be achieved very quickly.

It is one of the other objects of the present invention to provide a method for the use of the flexible loader apparatus for machine tools according to the present invention which allows a rapid change in its operation within a relatively short period of time.

In accordance with the present invention a flexible loader apparatus for machine tools is provided which comprises a base adapted to be built in a headstock of the machine tool or mounted near a main spindle thereof, or mounted on a stand to be installed near the machine tool on a suitable foundation, slides mounted to the base so as to be shiftable in a direction in parallel with the axial line of the main spindle, an arm mounted at its base end to the slide at its one end so as to be rotatable about the axial line of the slide, a wrist member mounted to the arm at its free end so as to be rotatable about an axial line in parallel with the axial line of the main spindle, a hand member mounted to the wrist member so as to be rotatable about an axial line orthogonal to the axial line of the main spindle, a pair of finger members mounted to the hand member generally in a direction orthogonal to the axial line of the main spindle so as to be opened and closed, and a driving mechanism for the arm as well as a transmission system for the wrist member and the hand member, whereby the arm, the wrist member, the hand member and the finger members are adapted to be cooperatively operated such that the finger members can grasp a workpiece carried on a workpiece transfer conveyor laid outside the machine tool, to supply it to a workpiece chuck element of the machine tool and/or to remove a machined workpiece therefrom to transfer it back onto the conveyor.

According to the present invention a method for use of the flexible loader apparatus for machine tools in accordance with the present invention is also provided wherein a ROM (Read Only Memory) for providing a preset operation command, and a RAM (Random Access Memory) provided to input and output modification commands in accordance with an operation modification command issued during the issue of the preset operation command, are connected to a micro-computer to control the operation of the flexible loader apparatus, a predetermined memory location being prepared in the RAM in accordance with the number of the operation modification demand so that a plurality of operational axes of the flexible loader and the amounts of their operations are memorized in the prepared memory location for the respective operational axes, and the modification operation is carried out in accordance with the order of the operational axes and the amounts of their operations.

In the present invention it is also contemplated to provide a double hand device for the flexible loader apparatus in which two pairs of finger members are mounted to the hand member so that a workpiece to be machined and a machined workpiece can be independently grasped by the hand members, resulting in a substantial decrease in the time required for the exchange of workpieces in the chuck mechanism of the machine tool.

## Brief Description of the Drawings

Other objects of the present invention and the invention itself will become more readily apparent by reference to the following specification and drawings, in which drawings:

Fig. 1 is a front elevational view of a digitally controlled lathe in which one embodiment of the flexible loader apparatus according to the present invention is installed;

Fig. 2 is a side elevational view of the lathe shown in Fig. 1;

Fig. 3 is a perspective view of the flexible loader apparatus shown in Figs. 1 and 2;

Fig. 4 is a front elevational view of the flexible loader apparatus shown in Fig. 3;

Fig. 5 is a side elevational view of the flexible loader apparatus shown in Fig. 4;

Fig. 6 is a longitudinal sectional view of the flexible loader apparatus shown in Figs. 3 to 5, disclosing the transmission system therefor;

Fig. 7 is a partial side elevational view to show the drive mechanism for the arm shown in Fig. 3;

Fig. 8 is a sectional view taken along the line VIII-VIII of Fig. 7;

Figs. 9A to 9K are views disclosing the successive operational stages of the flexible loader apparatus shown in Figs. 3 to 8;

Fig. 10 is a block diagram of the controlling system for the flexible loader apparatus shown in Figs. 3

Fig. 11 is a flow chart for instructing the flexible loader apparatus shown in Figs. 3 to 10 an operation to be carried out by the apparatus;

Fig. 12 is a view similar to Fig. 6 but disclosing a double hand device for the flexible loader apparatus as another embodiment of the present invention;

Fig. 13 is an enlarged front elevational sectional view of the apparatus seen at the lower part of Fig. 12, but rotated through substantially 180°;

Fig. 14 is a view of the apparatus shown in Fig. 13 as viewed in the direction shown by the arrow XIV therein; and

Fig. 15 is a view of the apparatus shown in Fig. 13 as viewed in the direction shown by the arrow XV therein.

## Best Mode of Carrying Out the Invention

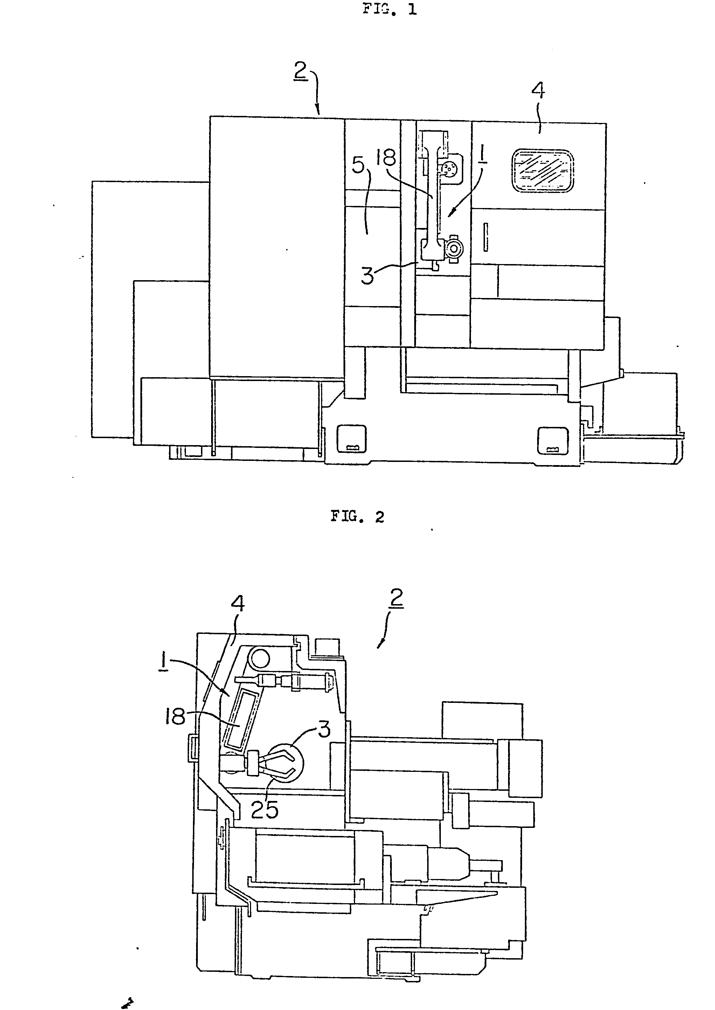

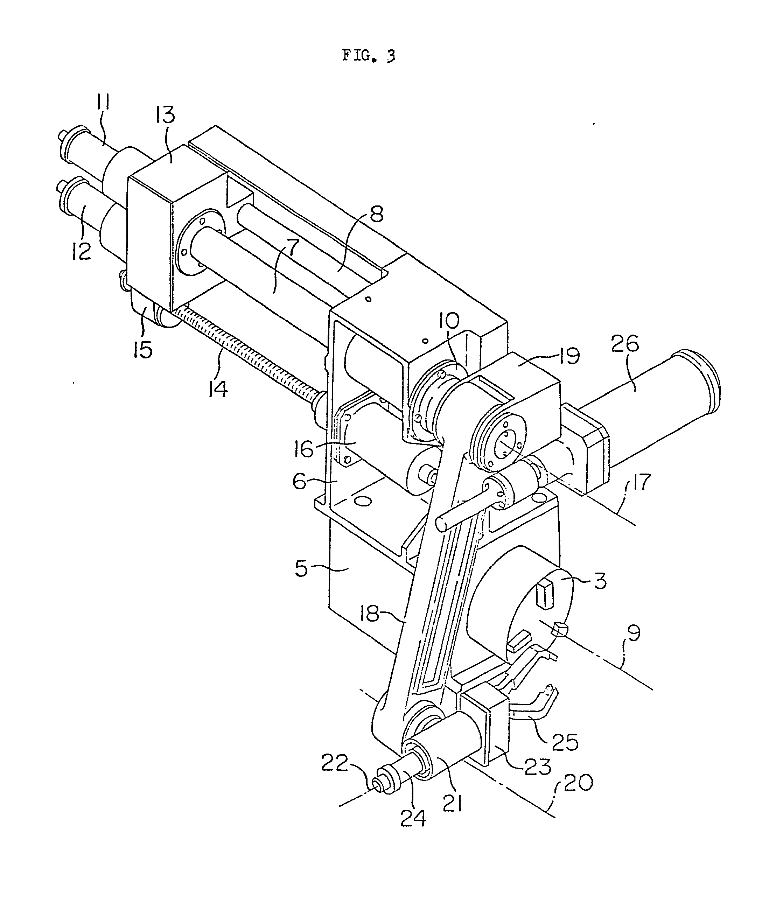

Now the first embodiment of the present invention will be explained in reference to Figs. 1 to 9 of the attached drawings. In Figs. 1 and 2 there is shown a digitally controlled lathe 2 in which a flexible loader apparatus 1 according to the present invention is installed. The flexible loader apparatus 1 is arranged within a splash guard 4 which shields the machining area of the lathe 2 to clamp a workpiece by means of a chuck 3 to machine it.

The loader apparatus is shown in detail in Figs. 3 to 6. As shown, fixedly secured by means such as bolts, to a headstock 5 of the lathe 2 in which a main spindle having the chuck 3 at its forward end is rotatively journaled, is a base 6 which carries a guide member 10 adapted to shiftably guide a hollow slide 7 in a direction parallel to the axial line 9 of the main spindle of the lathe 2, the base also shiftably mounting a slide 8 in parallel with the slide 7.

Mounted to the slides 7 and 8 at one end of each thereof are servomotors 11 and 12 as well as a gear box 13 to transmit outputs from these, to be further described below, after the speeds have been stepped up or down. A screw shaft 14 such as a ball screw or the like and a nut 15 in mesh therewith are mounted to the underside of the gear box 13. The screw shaft 14 is adapted to be rotated by a servo-motor 16 fixedly secured to the base 6 so that the slides 7 and 8 are moved forwards or backwards with the rotation of the screw shaft 14 by the servo-motor 16. Mounted to the slides 7 and 8 at their respective other ends is a member 19 which is adapted to mount an arm 18 at its base end so as to be rotatable about the axial line 17 of the slide 7. At the free end portion of the arm 18 a wrist member 21 is mounted so as to be rotatable about an axial line 20 in parallel with the axial lines 9 and 17. The wrist member 21 mounts a hand member 23 which is rotatable about an axial line 22 orthogonally intersecting the axial line 20. The hand member 23 mounts a pair of finger members 25 which are adapted to be opened and closed by means of a cylinder 24 secured to the wrist member 21. The arm 18 is adapted to be rotated by a servo-motor 26 fixedly secured to the member 19, and the wrist member 21 and the hand member 23 are adapted to be driven by the abovesaid servo-motors 11 and 12, respectively, through the gear box 13, slide 7, and a transmission system comprising shafts, gears, chains, sprocket wheels, etc. contained within the slide 7 and the arm 18.

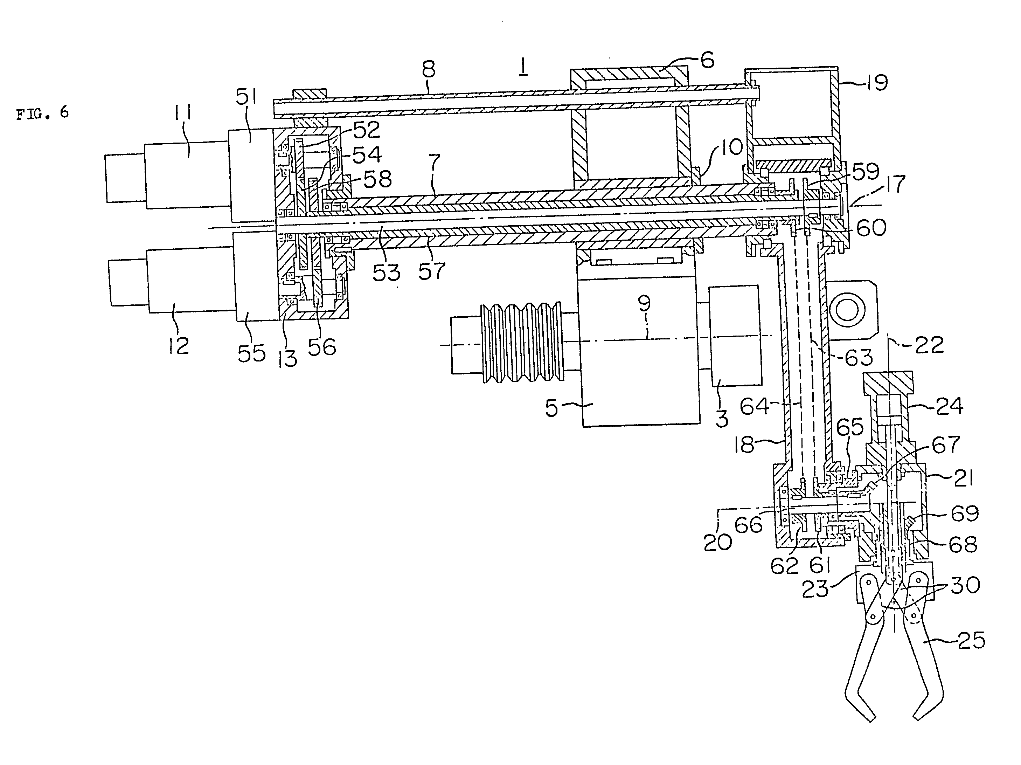

The transmission system is shown in detail in Fig. 6. As shown, the output shaft of the servo-motor 11 is drivingly connected to a gear 52 within the gear box 13 through a reduction gear box 51, the gear 52 being in mesh with a gear 54 which is mounted to a shaft 53 at its one end passed through the hollow slide 7. The output shaft of the servo-motor 12 is drivingly connected to a gear 56 within the gear box 13 through a reduction gear box 55, the gear 56 being in mesh with a hollow shaft 57 at its one end, whereby the shaft 53 is received within the hollow shaft 57 coaxially thereto. Secured to the shaft 53 and the hollow shaft 57 at their other ends are sprockets 59 and 60, respectively, within the arm 18, the sprockets 59 and 60 being operatively connected to sprockets 61 and 62, respectively, arranged within the arm 18 at its lower end portion on the axial line 20, through chains 63 and 64, respectively, disposed axially within the arm 18, whereby the sprocket 61 is mounted to a hollow shaft 65 at its one end which is rotatively journaled within the arm 18 so as to be rotatable about the axial line 20, the wrist member 21 being secured to the hollow shaft 65 at its other end. The sprocket 62 is secured to a shaft 66 at its one end which is rotatively received within the hollow shaft 65, and the other end of which fixedly secures a bevel gear 67 which in turn meshes with a bevel gear 69 which is mounted to a further hollow shaft 68 at its one end, the shaft 68 being mounted within the wrist member 21 so as to be rotatable about the axial line 22, and the hand member 23 is fixedly secured to the shaft 68 at its other end portion so as to be located near one end of the wrist member 21. The piston rod of the cylinder 24 secured to the wrist member 21 at the end remote from the hand member 23 is passed through the hollow space of the shaft 68 to be connected to the finger members 25 through a suitable linkage 30. It will be apparent that, upon operation of the servo-motors 11 and 12, the wrist member 21 and the hand member 23 can be rotated about the axial lines 20 and 22, respectively. It should also be noted that, if the wrist member 21 is rotated about the axial line 20 by the operation of the servo-motor 11 only with the servo-motor 12 at a standstill, since a planetary gear is constituted by the bevel gears 67 and 69, the hand member 23 is made to be simultaneously rotated about the axial line 22. That is, since the bevel gear 67 is fixed and the bevel gear 69 in mesh therewith is revolved together with the wrist member 21, the bevel gear 69 is caused to be rotated about the axial line 22 together with the hand member 23. Therefore, in order to rotate only the wrist member 21 without rotating the hand member 23 it is necessary to actuate the servo-motor 12 also, to rotate the shaft 66 in the same direction as the direction of rotation of the hollow shaft 65 and at the same velocity as the shaft 65. By so doing, since no relative rotation arises between the bevel gears 67 and 69, the hand member 23 does not rotate. Thus, the operation is simplified and the manoeuvrability is improved. Further, it is preferable that the velocity ratio between the sprockects 59 and 61 and that between the sprockets 60 and 62 be selected so as to be equal. This can be easily accomplished by making the number of teeth on each of these four sprockets the same. By adopting such measures, since the rotation of the sprockets 61 and 62 caused by the rotation of the arm 18 about the axial line 17 becomes equal, no relative movement is generated between the wrist member 21 and the hand member 23. Further, it is preferable that the reduction ratios of the gear boxes 51 and 55 be made equal, and that the gear ratio between the gears 52 and 54, as well as that between the gears 56 and 58, be made equal. By so doing, whenever the servo-motor 11 is actuated, the same pulses are given to the servo-motor 12 in the same direction, the shaft 66 and the hollow shaft 65 are able to achieve identical rotation, so that no relative rotation between the wrist member 21 and the hand member 23 occurs.

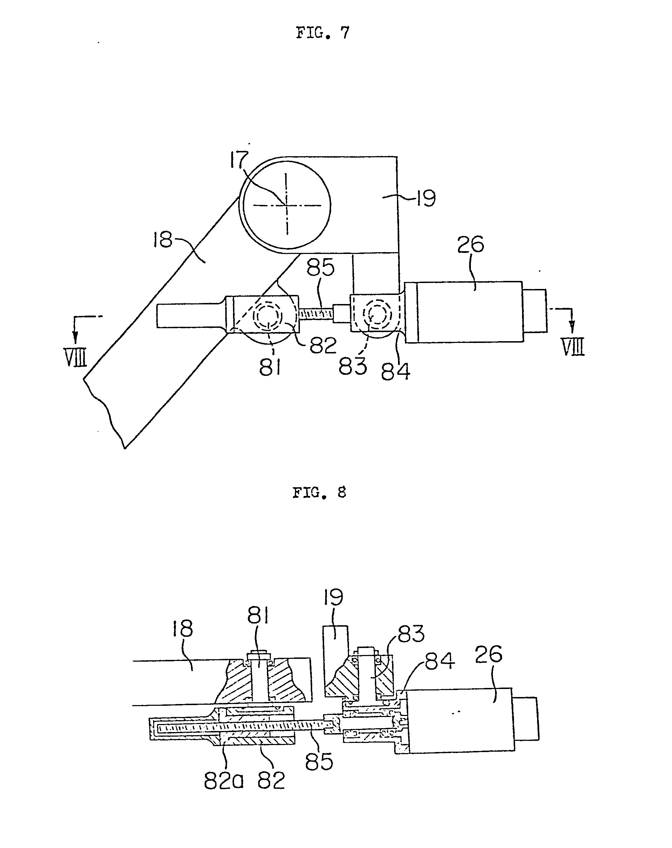

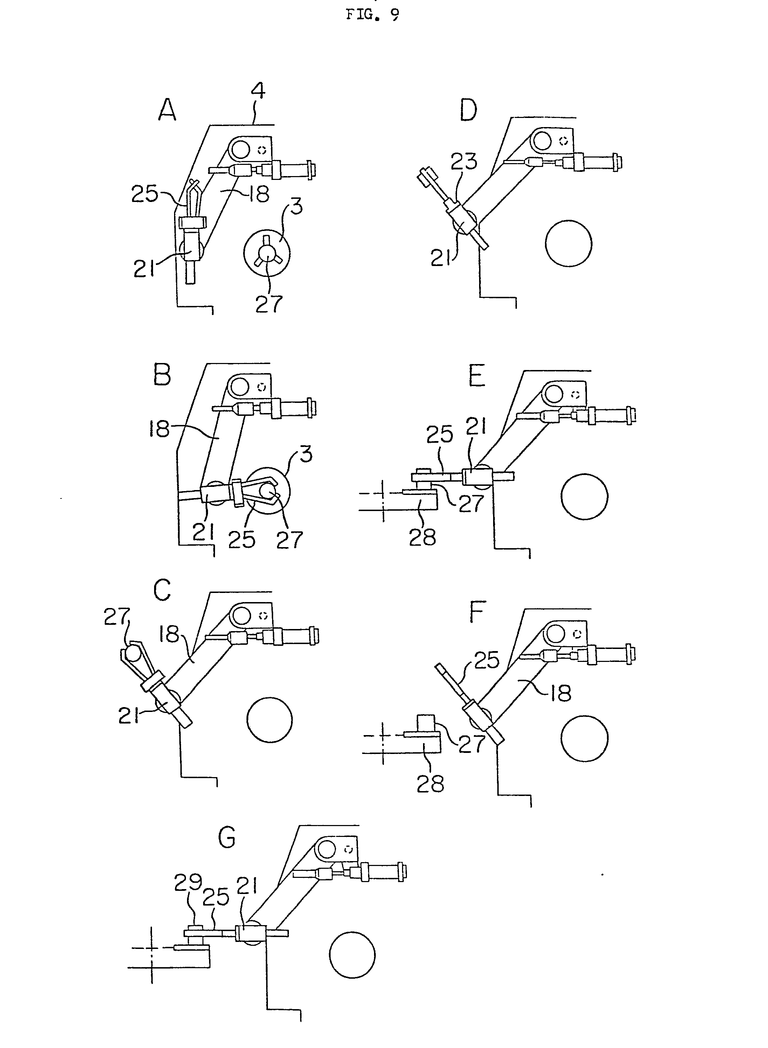

Next, the driving mechanism for the arm 18 will be explained in reference to Figs. 7 and 8.

As shown in the drawings the arm 18 is provided with a first pivot 81 so as to be rotatable about an axis parallel to the axial line 17, a nut assembly 82 being mounted to the end of the pivot 81. The member 19 which rotatively carries the arm 18 at its base portion is provided with a second pivot 83 so as to be rotatable about an axis in parallel with the axial line 17, a servo-motor 25 being mounted to the pivot 83 through a bracket 84. Fixedly secured to the shaft of the servo-motor 26 is a screw rod 85 which is in mesh with the nut assembly 82. Thus, upon rotation of the servo-motor 26, the screw rod 85 rotates to move the nut assembly 82, thereby the arm 18 is rotated about the axial line 17. Since this constitution makes the overall dimensions of the driving mechanism for the arm 18 small, the manoeuvrability and operability of the machine tool are not affected even through the flexible loader apparatus according to the present invention is installed within the splash guard 4.

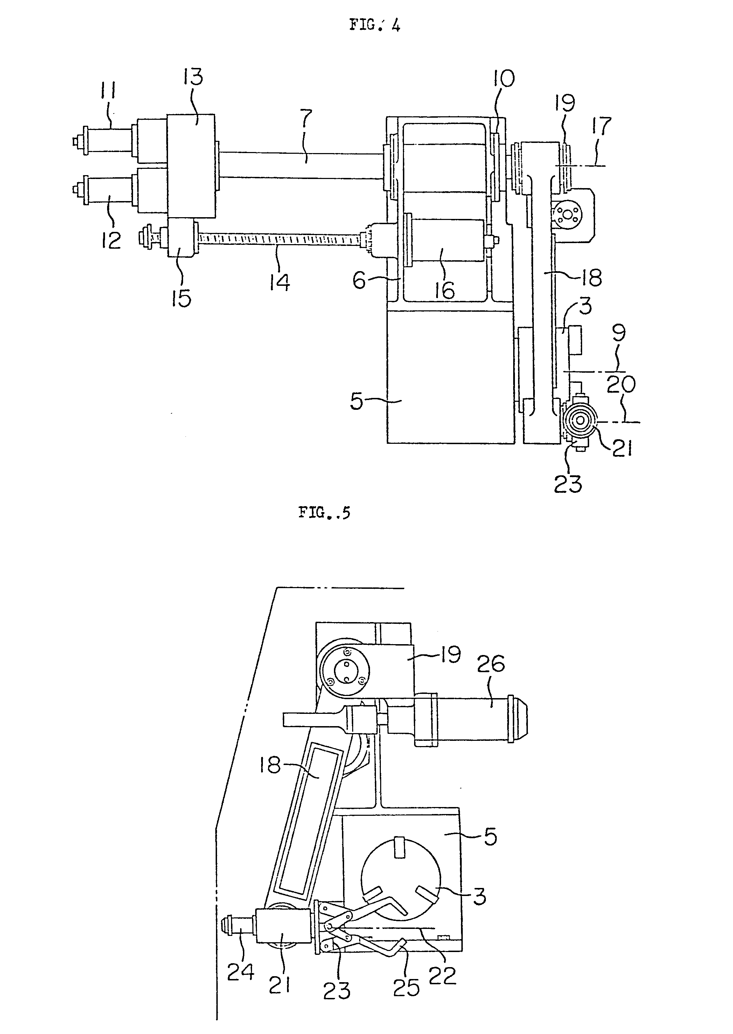

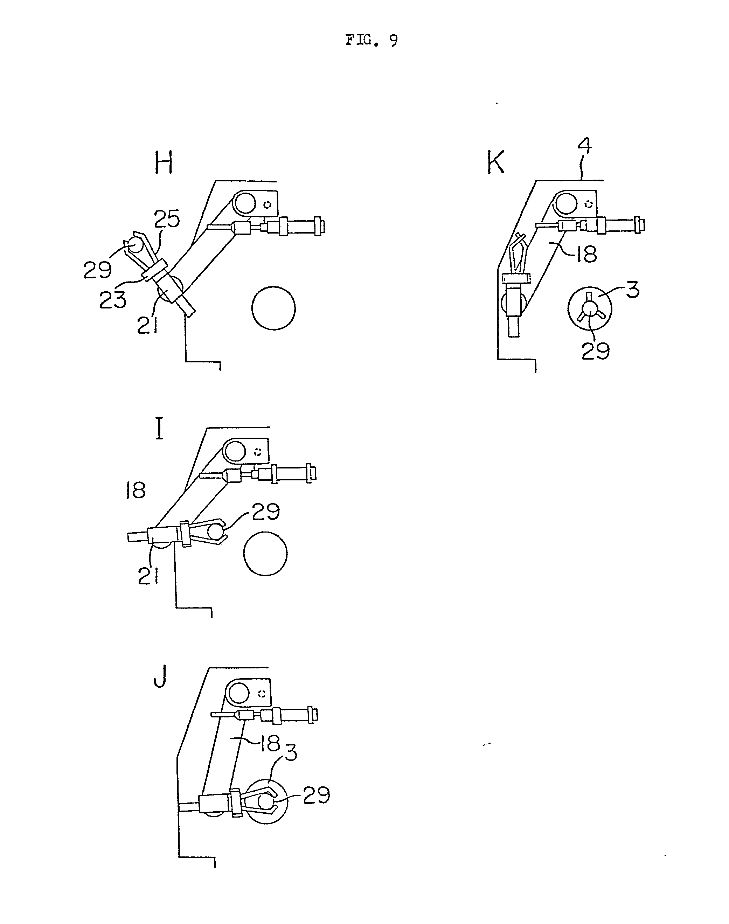

Now the operation of the flexible loader apparatus, the constitution of which has been described above, will be explained referring to Figs. 9(A) to 9(K) which schematically represent the loader apparatus shown in Fig. 5 in a side elevational view and wherein Fig. 9(A) represents the state of the loader apparatus prior to its operation and from this state the splash guard 4 is opened. For this purpore, after the finger members 25 at the forward end of the arm 18 are engaged with an engaging member (not shown) provided in the splash guard 4, the arm 18 is moved in the axial line 9 of the main spindle although it is also possible to separately provide an air cylinder exclusively used for opening and closing the splash guard 4. Subsequently the arm 18 is moved back to a middle position. Then the wrist member 21 is rotated about the axial line 20 in the clockwise direction as viewed in the drawings and simultaneously the finger members 25 are opened. Subsequently, after the arm 18 is rotated in the anticlockwise direction around the axial line 17 so as to approach a workpiece 27 held by the chuck 3, the arm 18 is moved backwards along the axial line 9 of the main spindle to close the finger members 25 to grasp the machined opening of the claws of the chuck 3. Then the arm 18 is moved forward in parallel with the axial line 17 so that the workpiece 27 is released from the chuck 3. Subsequently the arm 18 is rotated clockwise about the axial line 17 and simultaneously the wrist member 21 is rotated anticlockwise about the axial line 20 so that the state shown in Fig. 9(C) is reached. Then the hand member 23 is rotated through 90° about the axial line 22 so that the state shown in Fig. 9(D) is reached. Further, upon rotation of the wrist member 21 about the axial line 20 so that the workpiece 27 is located above a flat conveyor 28 as shown in Fig. 9(E). After the finger members 25 are opened and the wrist member 21 is restored to a position shown in Fig. 9(F), whereby the workpiece 27 is laid on the conveyor 28, the arm 18 is moved forward in parallel with the axial line 17 so as to approach another workpiece 29 on the conveyor 28, the workpiece 29 being grasped by the finger members 25, as shown in Fig. 9(G). Subsequently the wrist member 21 and the hand member 23 are rotated about the axial lines 20 and 22, respectively, so as to reach the state shown in Fig. 9(H). Further the wrist member 21 is rotated in the anticlockwise direction about the axial line 20, reaching the state shown in Fig. 9(I). Then the arm 18 is rotated about the axial line 17 so that, as shown in Fig. 9(J), the workpiece is directed to the chuck 3. Thereafter the arm 18 is moved rearwards along the axial line 17 till the workpiece 29 is introduced into the chuck 3, whereupon the claws of the chuck 3 are closed to grasp the workpiece 29. Then the finger members 25 are opened, the arm 18 being moved in the direction of the axial line 17 to its initial position while the workpiece 29 is grasped by the chuck 3 as shown in Fig. 9(K). In this case the splash guard 4 may be simultaneously closed by the movement of the arm 18. Thus the workpiece 29 is ready for machining.

As apparent from the foregoing, since in this embodiment the flexible loader apparatus is installed within the digitally controlled lathe, no extra space is required for the loader apparatus, the necessary floor area thus not being increased, and since almost all of the operations of the loader apparatus are carried out inside the splash guard 4 and the operations outside it are carried out remote from the operator, the degree of safety is raised to a very high level. Further, since the hand member 23 can be rotated through 90° about the axial line 22, as shown in Figs. 9(A) to 9(K), in the case of a cylindrical workpiece, the workpiece laid on a flat conveyor 28 in an upright position can be grasped by the finger members 25 to be held in position by the chuck or a machined workpiece can be returned to the flat conveyor 28 in an upright position. Therefore, there is no need to support a cylindrical workpiece using V-blocks, etc. as has been necessary heretofore. Moreover, since the hand member 23 can also be rotated by 180° about the axial line 22, the workpiece grasped by the finger members 25 can be released from the chuck 3 to be turned over and then be reinserted to be grasped by the chuck again.

The constitution and the fundamental operations of the first embodiment of the present invention have been explained above, the following being an explanation of the method for its use according to the present invention.

It is necessary to vary the position to grasp a workpiece by the finger members, the position at which the chuck grasps the workpiece, the position at which the finger members grasp the machined workpiece, etc. depending on the shape, dimensions, etc. of the workpiece or the raw stock. Therefore, it is required that a controller for the loader apparatus has to be instructed with and remember the operations such as those shown in Figs. 9(A) to 9(K) in connection with the respective workpieces to be machined. However, the operation required for carrying out this procedure is generally complicated, e.g. in the case of a conventional industrial robot, it has taken a very long time to cause the robot to be instructed and remember the corresponding operations necessary for the machining of the workpiece. Therefore, when a relatively small lot of workpieces is to be machined, if a general industrial robot is used, the ratio of the time required for instruction to the actual machining time becomes too large, so efficiency is very low.

Therefore, it is a further object of the present invention as stated above to provide a method for the use of the flexible loader apparatus according to the present invention which makes the change in operations of the flexible loader apparatus very easy.

The fundamental concept of the present invention in attaining this object resides generally in that the fundamental operations of the loader apparatus are fixed and invariable with only those operations which have to be changed as the workpiece is changed being modified.

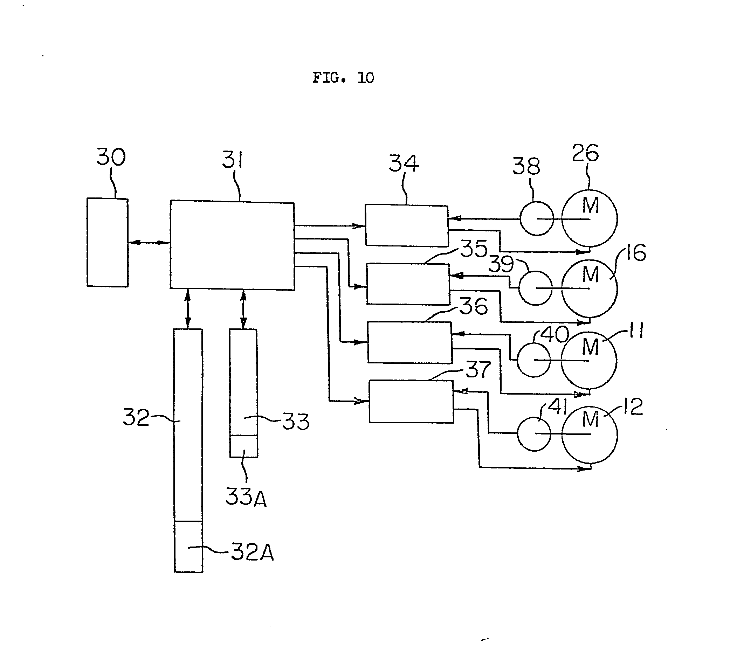

Fig. 10 shows a controller for the flexible loader apparatus according to the present invention in a block diagram. As shown in the drawing a display panel 30 is connected to a micro-computer 31 to which are connected a ROM, 32 and a RAM, 33. The ROM 32 memorizes a control program of the micro-computer 31 to control the loader apparatus. The area 32A of the ROM 32 memorizes the operational program of the loader apparatus such that the micro-computer 31 reads this program to produce an operational command for the loader apparatus. The RAM 33 operates in such a manner that at the time when the micro-computer 31 handles the data the RAM 33 changes the content of the data, memorizes the operational sequence, produces an operational command, and memorizes and corrects it. The operation memory area 33A of the RAM 33 changes the operations of the loader apparatus memorized in the area 32A into the content to be memorized in the area 33A. The operation commands from the micro-computer 31 are transmitted to servo-amplifiers 34, 35, 36 and 37 to drive the servo-motors 26, 16, 11 and 12, respectively. Feedback signals from pulse generators 38, 39, 40 and 41, provided in the servo-motors 26, 16, 11 and 12, respectively, are sent to the servo-amplifiers 34, 35, 36 and 37, respectively.

The flexible loader apparatus in accordance with the present invention is actuated by the controller as explained above and shown in Fig. 10. Now the operation will be explained somewhat concretely, representing the program to be memorized in the area 32A.

In the area 32A, as is usual in a conventional digitally controlled machine tool, a program such as, for example, that described below is assumed to be contained:

| | |
|---|---|
| N11 Z 200CR | ... 1. |
| X-50CR | ... 2. |
| Y-300CR | ... 3. |
| M 11CR | ... 4. |
| H 01CR | ... 5. |
| H 12CR | ... 6. |
| M 14CR | ... 7. |
| Z 100CR | ... 8. |

Step 1 is the operation No. 11, "Z 200" meaning that the arm 18 is to be moved in the direction of the axial line 9 of the main spindle by 200 pulses. "X-50" of step 2 means to rotate the arm 18 anticlockwise around the axial line 17 by 50 pulses, "Y-300" of step 3 means to rotate the wrist member 21 clockwise around the axial line 20 by 300 pulses, and "M 11" of step 4 means to open the chuck 3. "H 01" of step 5 is a command to instruct the operation and for this purpose, in the area 33A of the RAM 33 a memory area for "H 01" is provided. Originally nothing is memorized in this memory area for "H 01".

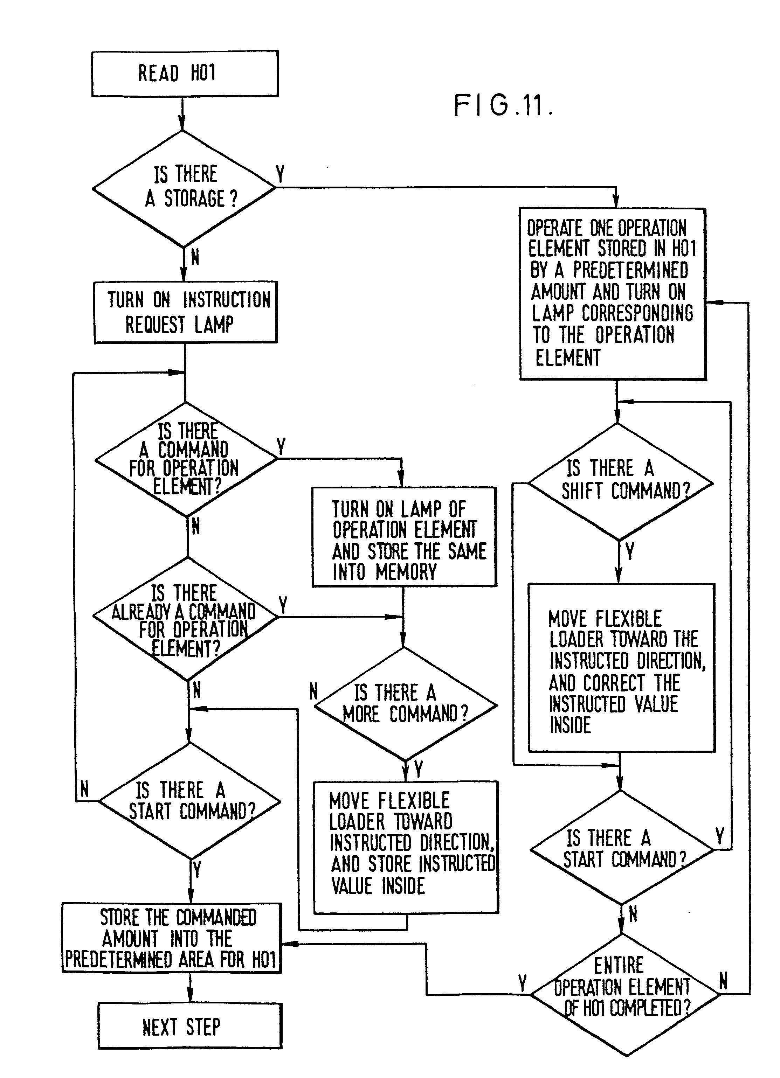

Fig. 11 is a flow chart for instructing the operations in "H 01". When "H 01" is read out from the area 32A of the ROM 32 it is discriminated whether or not there is a program for "H 01" within the area 33A of the corresponding RAM 33.

When there is a program, the respective servomotors initiate the respective motions of the respective operational elements, i.e. the rotation of the hand member 23, the rotation of the wrist member 21, the rotation of the arm 18 and the movement of the arm 18, by the predetermined values, in accordance with the program. In the memory area provided for "H 01", a programs such as, for example, that described below will have been previously given:

W 23: Rotation of the hand member 23 about the axial line 22;

Y 12: Rotation of the wrist member 21 about the axial line 20;

X 8: Rotation of the arm 18 about the axial line 17; and

Z 40: Movement of the arm 18 in the direction of the axial line 5 of the main spindle.

In the automatic operation, after the "H 01" step is completed by sequentially carrying out the predetermined operations in accordance with this program, the next step 6 is entered.

At the time of the instructing operation, first the step "W 23" is carried out. Upon completion of the step "W 23", the lamp for the hand member in the display panel 30 is turned on to notify the completion, the load apparatus being at a standstill until the next starting command is given by the operator. The operator gives a command for movement, if necessary. By this command, the hand member 23 of the loader apparatus continues to rotate in the designated direction as long as the command is given. At a desired time, when the movement command is ceased, the command signal is corrected to that value, and when the starting command is given, the next step "Y 12" is effected. Upon completion of "Y 12" the lamp for the wrist member in the display panel 30 is turned on to notify the completion of "Y 12". The operator gives a movement command, if necessary, to change the movement value (command value) of the wrist member 21. Analogously, as to the command values for the rotation about the axial line 17 and the movement in the direction of the axial line 17 of the arm 18 they can be made to be desired values. At the time of the completion of these operations the command values newly set are memorized in the area 33A, and the next step 6 is entered.

When no program is present in the memory area provided for "H 01" in the area 33A, the lamp requesting instruction is turned on in the display panel 30. Then the operator causes the memory area to memorize the command amounts successively for the respective operational elements according to the operational order. That is, when a specific operational element is designated, a lamp for this element is turned on, and when the command for the movement is given, the designated element is actuated in the commanded direction. The movement is stopped at a desired time, the amount of the movement being memorized. This procedure is carried out for each operational element, and after all of the operations have been memorized, the starting command is given, the next step 6 being entered. In accordance with "M 12" of step 6 the chuck 3 grasps the workpiece. In accordance with "M 14" of step 7 the chuck 3 opens; in accordance with "Z 100" of step 8 the arm 18 moves along the axial line 17 to fully release the workpiece from the chuck 3.

Although the above is an explanation of a part of the program, as to the operation of grasping the raw stock 29 from the flat conveyor 28 the program for the operational command for this operation only can be changed, easily, separately from the other fixed operations. The procedure for this is similar to that described above, e.g. a memory area for "H 02" can be used.

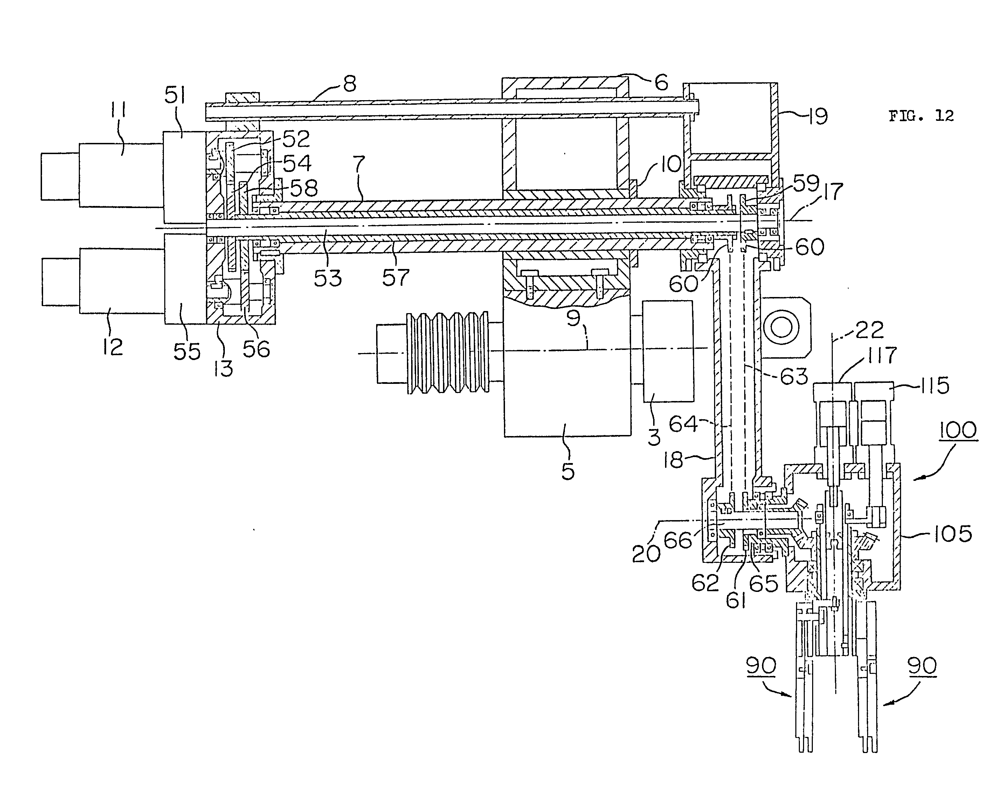

Next a double hand device as another embodiment of the present invention will be explained in reference to Figs. 12 to 15 wherein instead of one pair of finger members 25 as shown in Figs. 1 to 6 in connection with the first embodiment of the present invention two pairs of finger members 131 are provided.

First, referring to Fig. 12 wherein in a general view is shown a flexible loader apparatus with a double-hand device mounted to a lathe, a base 6 is fixedly secured to a headstock 5 of the lathe which rotatively supports a main spindle provided with a chuck 3 at its forward end, slides 7 and 8 being mounted to the base 6 so as to be shiftable along an axial line 17 in parallel with the axial line 9 of the main spindle. Mounted to the slides 7, 8 at their one ends are servo-motors 11, 12 and a gear box 13 to step up or down the outputs therefrom and to transfer them further. A nut, not shown, is mounted to the underside of the gear box 13, and a screw spindle such as a ball screw, not shown, in screw engagement with the nut is elongated in parallel with the axial line 17 of the slides 7, 8 to the base 6 so that, upon rotation of the screw spindle by a servo-motor (not shown) mounted to the base 6, the slides 7, 8 are adapted to be shifted along their axial line 17. The output of the servo-motor 11 is operatively connected through a reduction gear box 51 associated therewith to a gear 52 within the gear box 13, the gear 52 being in mesh with a gear 54 which is in turn secured to one end of a shaft 53, which passes through the slide 7, while the output shaft of the servo-motor 12 is operatively connected through a reduction gear box 55 associated therewith to a gear 56 within the gear box 13, the gear 56 being in mesh with a gear 58 secured to a hollow shaft 57, coaxial with the shaft 53, at its one end. The shaft 53 and the hollow shaft 57 are provided with sprockets 59 and 60, respectively, at their other ends.

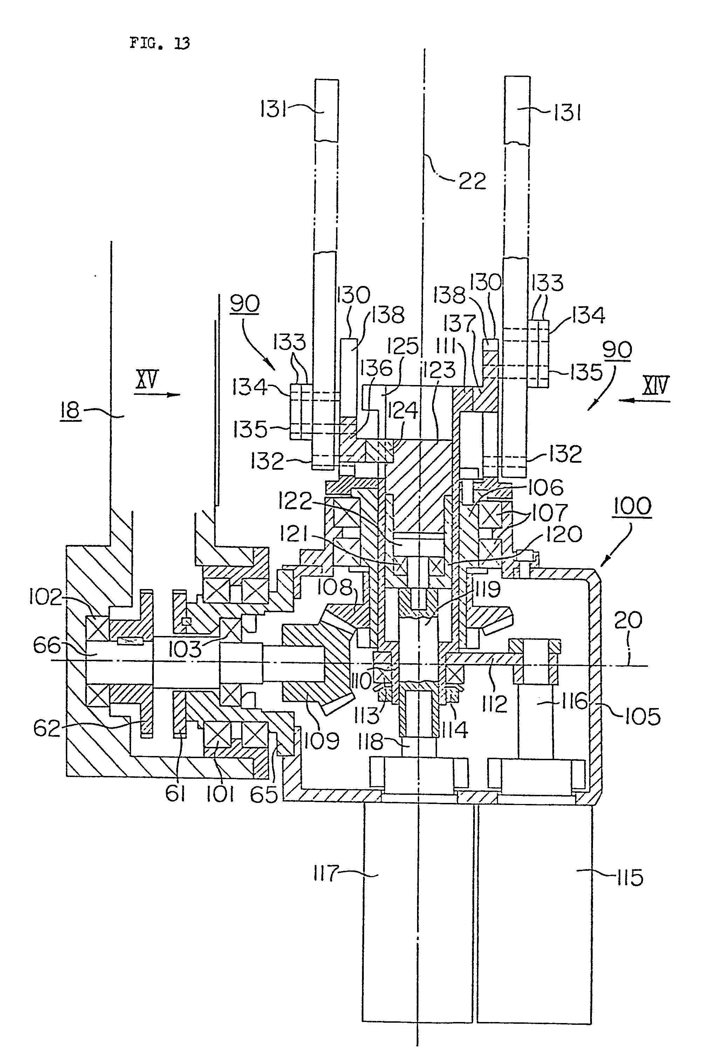

Fixedly secured to the slides 7, 8 at their other ends is a support member 19 within which is rotatively mounted a hollow arm 18 at its base end so as to be swingable about the axial line 17 of the slide 7. The arm 18 mounts a pivot (not shown) near its base end so as to be rotatable about an axial line in parallel with the axial line 17, a nut assembly (not shown) being secured to the pivot at its one end, and the support member 19 mounts another pivot (not shown) so as to be rotatable about an axial line in parallel with the axial line 17, a servo-motor (not shown) being secured to the pivot at its one end, and a screw shaft (not shown) which is in engagement with the nut assembly is fixedly secured to the shaft of the servo-motor. Thus, when the servo-motor is operated, the arm 18 is swung about the axial line 17 through the screw shaft and the nut assembly in engagement therewith. However, in Fig. 13 the details of the actuating mechanism for the arm 18 have been omitted as they are the same as those already explained in reference to Figs. 7 and 8.

Mounted to the arm 18 near its free end are a hollow shaft 65, which is mounted so as to be rotatable about an axial line 20 in parallel with the axial line 17 of the slide 7, and a stub shaft 66, which is mounted so as to be rotatable within the hollow shaft 65 coaxially thereto, sprockets 61 and 62 being fixedly secured to the hollow shaft 65 and the stub shaft 66, respectively, with the sprockets 61 and 62 operatively connected to the shaft 53 and the hollow shaft 57 within the slide 7, respectively, through the sprockets 59 and 60, respectively, secured thereto by connecting the sprockets 59 and 60 with the sprockets 61 and 62, respectively, through chains 63 and 64, respectively. Thus, it will be appreciated that, similar to the first embodiment shown in Figs. 1 to 11, upon operation of the servo-motors 11 and 12 connected to the slides 7 and 8 at their one ends, the hollow shaft 65 and the stub shaft 66 are respectively rotated through the sprockets and the chains.

As shown in Fig. 13 the hollow shaft 65 is mounted to the arm 18 by bearings 101 so as to be rotatable about the axial line 20, the stub shaft 66 being rotatively journaled within the hollow shaft 65 with the one end thereof being rotatively supported by the arm 18 through a bearing 102 and the mid portion thereof being rotatively supported by a bearing 103 mounted within the hollow shaft 64. Fixedly secured to the hollow shaft 65 is a gear box or a wrist member 105 so as to be rotatable about the axial line 20, together with the shaft 65, relative to the arm 18. A second hollow shaft 106 is mounted within the gear box 105 by bearings 107 so as to be rotatable about an axial line 22 orthogonal to the axial line 20. Fixedly secured to the second hollow shaft 106 at its lower end is a bevel gear 108 which is in mesh with a bevel gear 109 that is fixedly secured to the stub shaft 66 at its one end. Thus, when the stub shaft 66 is rotated through the transmission system as described above from the main spindle side of the lathe, the second hollow shaft 106 is adapted to be rotated through the bevel gears 108, 109 by the stub shaft 66. An outer sleeve 111 is shiftably received within the second hollow shaft 106, the sleeve 111 having a small diameter portion 110 at its lower part, and a shifter 112 is arranged at the small diameter portion 110 at right angles to the axial line 22 of the second hollow shaft 106 to be rotatively secured to the outer sleeve 111 through a thrust bearing 113 by a lock nut 114 screwed to the small diameter portion 110. The shifter 112 is fixedly connected to the upper end of a piston rod 116 of a fluid cylinder 115 which is fixedly secured to the gear box 105 at its bottom in the direction parallel to the axial line 22. A shaft 119 is mounted within the bore of the small diameter portion 110 so as to be shiftable in the direction of the axial line 22, the shaft 119 being secured to the upper end of a piston rod 118 of a fluid cylinder 117 that is secured to the bottom of the gear box 105 in the direction of the axial line 22. An inner sleeve 120 shiftably received within the bore of the outer sleeve 111 is fixedly secured at its lower end to the upper end of the shaft 119 with the bottom being rotatively secured thereto by screwing a support shaft 122 to the shaft 119 with a thrust bearing 121 interposed therebetween. A shaft 123 shiftably received within the bore of the outer sleeve 111 is fixedly secured at its lower end to the upper end portion of the inner sleeve 120. A connector 124 is fixedly secured to the upper end of the shaft 123 at right angles to the axial line 22 of the second hollow shaft 106 so as to project radially through a slot 125 formed in the wall of the outer sleeve 111 at its upper portion in the direction of the axial line 22.

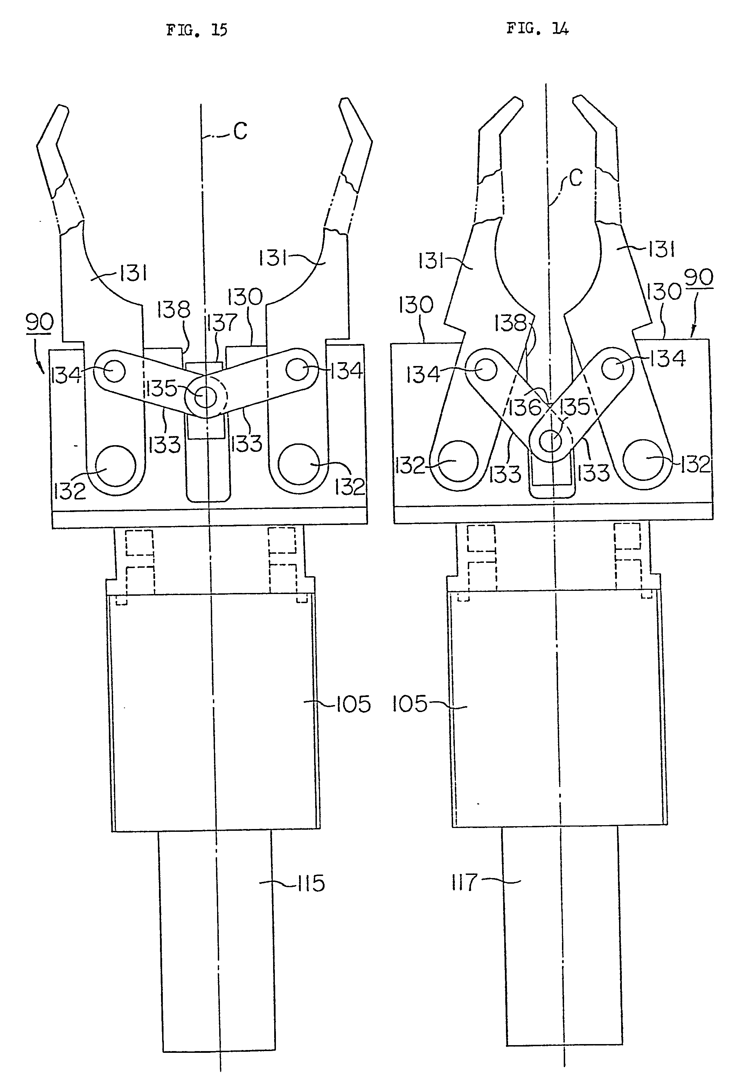

Provided on the upper end surface of the second hollow shaft 106 projecting out of the gear box 105 are a pair of hands 90 each adapted to grasp a workpiece. That is, provided on the upper surface of the second hollow shaft 106 is a pair of vertical walls 130 as the base plates for the hands 90 such that they elongate in parallel with each other and at the same time are in symmetry with respect to the axial line 22, and each of the walls 130 mounts on its outer surface a pair of finger members 131 so that the finger members 131 are spaced apart from each other and are equi-distant from a plane C containing the axial lines 20 and 22, and are pivotally connected to the walls 130 at their lower end portions by pivots 132 as shown in Figs. 15 and 16. Each of the finger members 131 of the respective pairs rotatively mounts at a portion above the pivot 132 a connecting link 133 at its one end by a pivot 134, the other ends of the connecting links 133 belonging to the same pair being pivotably connected together by a pivot 135, whereby one of the pivots 135 is fixedly secured to a connecting member 136 secured to the connector 124 which is secured to the shaft 123, and the other of the pivots 135 is fixedly secured to a connecting member 137 secured to the upper end of the outer sleeve 111. The connecting members 136 and 137 are adapted to be shiftable in the direction of the axial line 22 within slots 138 which are respectively formed in the vertical walls 130 in symmetry with respect to the plane C. At this point it will be appreciated that each pair of finger members 131 of the respective hands 90 can be operated independently so as to be opened and closed by means of the fluid cylinders 115 and 117, respectively, as will be explained later.

When the stub shaft 66 is rotated through the transmission system as stated above, the second hollow shaft 106 is rotated within the gear box 105 about the axial line 22 through the action of the bevel gears 109 and 108 meshing with each other. Therefore, the vertical walls 130 fixedly secured to the second hollow shaft 106 are rotated about the axial line 22 together with the pairs of finger members 131 pivotally mounted thereto. In this case, the outer sleeve 111 and the shaft 123 as well as the inner sleeve 120 and the shaft 119, both integrally secured to the shaft 123 are also rotated, but since the outer sleeve 111 and the inner sleeve 120 are connected to the fluid cylinder 115 and 117, respectively, through the thrust bearings 113 and 121, respectively, their rotations are not interfered with by the fluid cylinders 115, 117.

When the hollow shaft 65 is rotated through the transmission system as above described about the axial line 22 relative to the arm 18, the gear box 105 is rotated about the axial line 20, resulting in the rotation of the pairs of finger members 131 as a whole about the axial line 20.

The operation of the embodiment shown in Figs. 13 to 15 having such a constitution as explained so far, will be explained below.

When the piston rod 116 or 118 of the fluid cylinder 115 or 117 is moved in the direction of the axial line 22 by the operation of the fluid cylinder 115 or 117, the outer sleeve 111 is shifted in the direction of the axial line 22 through the shifter 112 relative to the second hollow shaft 106, or the shaft 123 is shifted through the inner sleeve 120 in the direction of the axial line 22 relative to the outer sleeve 111, whereby the connecting member 137 rigidly connected to the outer sleeve 111 or the connecting member 136 rigidly connected to the shaft 123 through the connector 124 shifts along the slot 138 formed in the vertical wall 130 in the direction of the axial line 22. Accordingly, either one of the pairs of finger members 131, which have the one ends of the connecting links 135, each pivotally connected at the other end to the respective fingers 131 by the pivot 134, pivotally connected together by the pivot 135 to the connecting member 136 or 137, can pivot about the pivots 132 pivotally connecting the base end portion to the

OC52149

vertical wall 130, whereby the closing or opening of the free end portions of the finger members 131 takes place as shown in Fig. 15 or 16.

Since this embodiment has the constitution and operation as described above, when it is cooperated with a lathe, while one pair of finger members 131 holds a workpiece, the other pair of finger members 131 can grasp the machined workpiece. Therefore, when the arm 18 is shifted towards the axial line 9 of the main spindle of the lathe with one pair of finger members 131 holding a workpiece, the other pair of finger member 131 can grasp the machined workpiece held by the chuck 3 to withdraw the former from the latter after the latter has been released, and, after the pair of finger members 131 are rotated about the axial line 22 through 180° by the revolution of the second hollow shaft 106, when the arm 18 is again shifted towards the chuck 3, the workpiece held by one of the pairs of finger members 131 can be transferred to the chuck 3. Therefore, in accordance with this embodiment the exchange of a machined workpiece for a raw workpiece can be carried out more rapidly than in the case of the first embodiment. Further, this embodiment additionally reveals an advantage such as that since the two fluid cylinders 115 and 117 do not revolve about the axial line 22 when the pairs of finger members 131 are to be rotated about the axial line 22, the piping and (or) wiring to operate the fluid cylinders 115 and 117 does not get twisted when the finger members 131 are rotated about the axial line 22.

0052149

It is to be understood that although certain forms of the present invention have been illustrated and described, it is not to be limited thereto so far as such limitations are included in the following claims.

## Claims

1. A flexible loader apparatus for machine tools comprising a base means adapted to be mounted near a headstock of said machine tool thereon or on a stand adapted to be installed near said machine tool on a suitable foundation, slide means mounted in said base means so as to be shiftable in a direction parallel to the axial line of the main spindle of said machine tools, an arm means mounted at its base end to a support member secured to one end of said slide means so as to be rotatable about a first axial line parallel to said axial line of said main spindle, a wrist means mounted to said arm means at its free end so as to be rotatable about a second axial line parallel to said axial line of said main spindle, a hand means mounted to said wrist means so as to be rotatable about a third axial line orthogonal to said second axial line, finger means mounted to said hand means so as to elongate substantially in parallel with said third axial line and adapted to be opened and closed to grasp a workpiece, and a transmission system adapted to independently drive said wrist means and hand means, whereby said finger means are adapted to be located at a position near a chuck means of said headstock and a position near a conveyor means outside said machine tool.

2. A flexible loader apparatus for machine tools as claimed in claim 1 wherein said slide means is adapted to be shifted relative to said base means by a driving mechanism comprising a servo-motor means mounted to said base means, a first screw shaft means adapted to be driven by said first servo-motor means and a nut assembly secured to said slides at their other ends and threadably engaging with said first screw shaft means.

3. A flexible loader apparatus for machine tools as claimed in claim 1 or 2 wherein said arm means is adapted to be rotated by a driving mechanism comprising a first pivot means mounted to said arm means near said base end so as to be rotatable about a first pivot line parallel to said first axial line, a nut assembly fixedly secured to said first pivot means, a second pivot means mounted to said support member near said arm means so as to be rotatable about a second pivot line parallel to said first axial line, a second servo-motor means mounted to said second pivot means, and a second screw shaft means fixedly connected to said second servo-motor means and being in engagement with said nut assembly.

4. A flexible loader apparatus for machine tolls as claimed in claim 1, 2 or 3 wherein said transmission system comprises a third and a fourth servo-motor means mounted to said slide means at their other ends, a first and a second shaft means coaxially arranged within said slide means and operatively connected to said third and fourth servo-motor means, respectively, through respective reduction gear means, a third and a fourth shaft means coaxially arranged at said free end of said arm means and operatively connected to said wrist means and said hand means, respectively, a first and second sprocket means fixedly secured to said first and second shaft means, respectively, at their ends remote from said third and fourth servo-motor means, a third and a fourth sprocket means fixedly secured to said third and said fourth shaft means, respectively, and a first and a second endless chain means reeving over said first and third sprocket means and reeving over said second and fourth sprocket means, respectively.

5. A flexible loader apparatus for machine tools as claimed in claim 4 wherein said hand means is mounted to said wrist means through a hollow shaft means rotatively mounted thereto and adapted to be operatively connected to said fourth shaft means through a pair of bevel gear means fixedly secured to said fourth shaft means and said hollow shaft means, respectively.

6. A flexible loader apparatus for machine tools as claimed in claim 5 wherein said finger means comprises a pair of finger elements each pivotally connected to said hand means and adapted to be operated by a first cylinder means mounted to said wrist means through a linkage means passing through said hollow shaft so as to operatively connect the piston rod of said first cylinder means and said finger elements.

7. A flexible loader apparatus for machine tools as claimed in claim 5 wherein said finger means comprises two pairs of finger elements, each of said finger elements being separately pivotally mounted to said hand means through a first and a second upright support members, respectively, secured thereto so as to be opposed, and a sleeve is shiftably mounted within said hollow shaft means with a shaft means being shiftably contained therein, a second and third cylinder means each secured to said wrist means being operatively connected to said sleeve means and said shaft means, and said pairs of said finger elements are operatively connected
to said sleeve means and said shaft means through linkage
means, respectively.

8.  A flexible loader apparatus for machine tools
as claimed in claim 4 wherein the rotational ratio between
said first and third sprocket means and that between said
second and fourth sprocket means are selected to be identical.

9.  A flexible loader apparatus for machine tools
as claimed in claim 4 wherein the number of teeth of all of
said first, second, third and fourth sprocket means are
selected to be identical, and the reduction ratios of said
reduction gears of said third and fourth servo-motor means
are selected to be identical.

10.  A flexible loader apparatus for machine tools
as claimed in claim 4 wherein a control means is provided
which acts to control said third and fourth servo-motor
means such that when said third servo-motor means is initiated
to rotate said third shaft means in one direction at a
velocity said fourth servo-motor means is necessarily
initiated to rotate said fourth shaft means in the same
direction at the same velocity as said third shaft means.

11.  A method for the use of the flexible loader
apparatus for machine tools as claimed in any one of
preceeding claims characterized in that a read only memory
adapted to give a definite operation command previously
determined and a random access memory adapted to input and
output an operation modification command are connected to a
micro-computer means adapted to control the operation of
said flexible loader apparatus, said random access memory preparing a memory area corresponding to said operation modification command, and said memory area being made to memorize the amounts of the operations of a plurality of operational elements of said flexible loader apparatus, respectively, according to the order of said operations, whereby the correction of said operation demand is carried out according to said order and said amounts of said operations are memorized.

Hereunder is a translation of an amendment
made Under Article 19(1).

## Claims

1. (Amended) A flexible loader apparatus for machine tools comprising a base means adapted to be mounted directly on a headstock of said machine tool or near a main spindle of said machine tool, slide means mounted in said base means so as to be shiftable in a direction parallel to the axial line of the main spindle of said machine tools, an arm means mounted at its base end to a support member secured to one end of said slide means so as to be rotatable about a first axial line parallel to said axial line of said main spindle, a wrist means mounted to said arm means at its free end so as to be rotatable about a second axial line parallel to said axial line of said main spindle, a hand means mounted to said wrist means so as to be rotatable about a third axial line orthogonal to said second axial line, finger means mounted to said hand means so as to elongate substantially in parallel with said third axial line and adapted to be opened and closed to grasp a workpiece, and a transmission system adapted to independently drive said wrist means and hand means, whereby said finger means are adapted to be located at a position near a chuck means of said headstock and a position near a conveyor means outside said machine tool.

2. (Amended) A flexible loader apparatus for machine tools as claimed in claim 1 wherein said slide means is adapted to be shifted relative to said base means by a driving mechanism comprising a servo-motor means mounted to said base means, a first screw shaft means adapted to be

OU52149

driven by said first servo-motor means and a nut assembly secured to said slides at their other ends and threadably engaging with said first screw shaft means, and wherein said arm means is adapted to be rotated by a driving mechanism comprising a first pivot means mounted to said arm means near said base end so as to be rotatable about a first pivot line parallel to said first axial line, a nut assembly fixedly secured to said first pivot means, a second pivot means mounted to said support member near said arm means so as to be rotatable about a second pivot line parallel to said first axial line, a second servo-motor means mounted to said second pivot means, and a second screw shaft means fixedly connected to said second servo-motor means and being in engagement with said nut assembly.

3. (Amended) A flexible loader apparatus for machine tools as claimed in claim 2 wherein said transmission system comprises a third and a fourth servo-motor means mounted to said slide means at their other ends, a first and a second shaft means coaxially arranged within said slide means and operatively connected to said third and fourth servo-motor means, respectively, through respective reduction gear means, a third and a fourth shaft means coaxially arranged at said free end of said arm means and operatively connected to said wrist means and said hand means, respectively, a first and second sprocket means fixedly secured to said first and second shaft means, respectively, at their ends remote from said third and fourth servo-motor means, a and a second endless chain means reeving over said first and third sprocket means and reeving over said second and fourth sprocket means, respectively, and wherein said hand means is mounted to said wrist means through a hollow shaft means rotatively mounted thereto and adapted to be operatively connected to said fourth shaft means through a pair of bevel gear means fixedly secured to said fourth shaft means and said hollow shaft means, respectively.

4. (Amended) A flexible loader apparatus for machine tools as claimed in claim 3 wherein said finger means comprises a pair of finger elements each pivotally connected to said hand means and adapted to be operated to open and close the free ends of said finger elements by a first cylinder means mounted to said wrist means through a linkage means passing through said hollow shaft so as to operatively connect the piston rod of said first cylinder means and said finger elements.

5. (Amended) A flexible loader apparatus for machine tools as claimed in claim 3 wherein said finger means comprises two pairs of finger elements, each of said finger elements being pivotally mounted to said hand means through a first and a second upright support members, respectively, secured thereto so as to be symmetrical and in parallel with said third axial line, and a sleeve is shiftably mounted within said hollow shaft means with a shaft means being shiftably contained therein, a second and third cylinder means each secured to said wrist means being operatively connected to said sleeve means and said shaft means, and said pairs of said finger elements are connected to said sleeve means and said shaft means through linkage means, respectively, so as to have their free ends opened and closed.

6. (Amended) A flexible loader apparatus for machine tools as claimed in claim 3 wherein the rotational ratio between said first and third sprocket means and that between said second and fourth sprocket means are selected to be identical, or the number of teeth of all of said first, second, third and fourth sprocket means are selected to be identical and yet the reduction ratios of said reduction gears of said third and fourth servo-motor means are selected to be identical.

7. (Amended) A flexible loader apparatus for machine tools as claimed in claim 6 wherein a control means is provided which acts to control said third and fourth servo-motor means such that when said third servo-motor means is initiated to rotate said third shaft means in one direction at a velocity said fourth servo-motor means is necessarily initiated to rotate said fourth shaft means in the same direction at the same velocity as said third shaft means.

8. (Amended) A method for the use of the flexible loader apparatus for machine tools as claimed in any one of preceeding claims characterized in that a read only memory adapted to give a definite operation command previously determined and a random access memory adapted to input and output an operation modification command are connected to a micro-computer means adapted to control the operation of said flexible loader apparatus, said random access memory preparing a memory area corresponding to said operation modification command, and said memory area being made to memorize the amounts of the operations of a plurality of operational elements of said flexible loader apparatus, respectively, according to the order of said operations, whereby the correction of said operation demand is carried out according to said order and said amounts of said operations are memorized.

FIG. 1

FIG. 2

FIG. 3

FIG. 4

FIG. 5

FIG. 6

FIG. 7

FIG. 8

A
4
25
18
21
3
27

D
23
21

B
18
3
21   25   27

E
25   21
27
28

C
27
18
21

F
25
18
27
28

G
29  25  21

FIG. 9

H

25
29
23
21

K
4

18

3
29

I

18

29

21

J

18
3
29

FIG. 10

0052149

FIG.11.

```
                    ┌──────────────┐
                    │   READ HO1   │
                    └──────┬───────┘
                           │
                           ▼
                        ◇ IS THERE ◇──Y──────────────────────────────┐
                        ◇ A STORAGE?◇                                 │
                           │N                                         ▼
                           ▼                              ┌──────────────────────┐
                    ┌──────────────┐                      │ OPERATE ONE OPERATION│
                    │TURN ON       │                      │ ELEMENT STORED IN HO1│
                    │INSTRUCTION   │                      │ BY A PREDETERMINED   │
                    │REQUEST LAMP  │                      │ AMOUNT AND TURN ON   │
                    └──────┬───────┘                      │ LAMP CORRESPONDING   │
                           │                              │ TO THE OPERATION     │
                           ▼                              │ ELEMENT              │
                        ◇ IS THERE ◇                      └──────────┬───────────┘
                        ◇ A COMMAND ◇──Y──┐                          │
                        ◇ FOR OPERATION◇   │                         ▼
                        ◇ ELEMENT?  ◇      │              ◇ IS THERE A ◇
                           │N              ▼              ◇ SHIFT COMMAND?◇
                           │      ┌──────────────┐            │Y
                           │      │TURN ON LAMP OF│           ▼
                           ▼      │OPERATION ELEM.│  ┌──────────────────┐
                        ◇ IS THERE◇AND STORE THE  │  │ MOVE FLEXIBLE    │
                        ◇ALREADY A ◇──Y──SAME INTO │  │ LOADER TOWARD THE│
                        ◇COMMAND FOR◇  │  MEMORY   │  │ INSTRUCTED       │
                        ◇OPERATION ◇   │  └────┬───┘  │ DIRECTION, AND   │
                        ◇ELEMENT?  ◇   │       │      │ CORRECT THE      │
                           │N          │       ▼      │ INSTRUCTED VALUE │
                           │           │  ◇IS THERE A◇ │ INSIDE           │
                    N      ▼           │N ◇ MORE     ◇ └────────┬─────────┘
                    ◇ IS THERE A ◇     ◇◇◇ COMMAND? ◇           │
                    ◇ START      ◇        │Y                    ▼
                    ◇ COMMAND?   ◇        ▼            ◇ IS THERE A ◇──Y──┐
                       │Y         ┌──────────────┐    ◇ START COMMAND?◇    │
                       ▼          │MOVE FLEXIBLE │       │N                │
              ┌──────────────┐    │LOADER TOWARD │       ▼                 │
              │STORE THE     │◄───│INSTRUCTED    │  ◇ ENTIRE       ◇       │
              │COMMANDED     │    │DIRECTION, AND│  ◇ OPERATION    ◇──N────┤
              │AMOUNT INTO   │    │STORE INSTRUCTED│ ◇ ELEMENT OF   ◇       │
              │PREDETERMINED │    │VALUE INSIDE  │  ◇ HO1 COMPLETED?◇      │
              │AREA FOR HO1  │    └──────────────┘       │Y               │
              └──────┬───────┘                           └────────────────┘
                     ▼
              ┌──────────────┐
              │  NEXT STEP   │
              └──────────────┘
```

0052149

FIG. 12

0052149

11/12

FIG. 13

FIG. 15

FIG. 14

0052149

# INTERNATIONAL SEARCH REPORT

International Application No PCT/JP81/00078

| I. CLASSIFICATION OF SUBJECT MATTER (if several classification symbols apply, indicate all) 3 |
|---|
| According to International Patent Classification (IPC) or to both National Classification and IPC |
| Int. Cl.$^3$   B23Q7/04, B25J9/00 |

## II. FIELDS SEARCHED

| Minimum Documentation Searched 4 | |
|---|---|
| Classification System | Classification Symbols |
| Int. Cl.$^3$ | B23Q7/04, B25J5/00 - 17/02 |

| Documentation Searched other than Minimum Documentation to the Extent that such Documents are Included in the Fields Searched 5 | |
|---|---|
| Jitsuyo Shinan Koho | 1926 - 1981 |
| Kokai Jitsuyo Shinan Koho | 1971 - 1978 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| X | JP, B1, 49-29663           1974-8-6<br><br>TOYODA MACHINE WORKS, LTD. | 1, 3-7 |
| A | JP, Y2, 54-44369           1979-12-20<br><br>Hitachi Seiki Kabushiki Kaisha | 1 - 7 |
| A | JP, A1, 49-121089          1974-11-19<br><br>TOYODA MACHINE WORKS, LTD. | 11 |

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the International filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search 3 | Date of Mailing of this International Search Report 3 |
|---|---|
| May 27, 1981   (27.05.81) | June 8, 1981 (08.06.81) |
| International Searching Authority 1 | Signature of Authorized Officer 10 |
| Japanese Patent Office | |